# EUROPEAN PATENT APPLICATION

(11) **EP 2 665 316 A2**
(43) Date of publication of application: **20.11.2013**
(21) Application number: 13004084.3
(22) Date of filing: 15.11.2011
(51) Int. Cl.: H04W 60/00

(54) **Handling emergency bearer service**

(30) Priority: 15.11.2010 US 413491 P; 23.12.2010 US 201061426518 P
(62) Divisional of application: 11009082.6
(71) Applicant: HTC Corporation, Taoyuan County 330 (TW)
(72) Inventor: Tiwari, Kundan, 330 Taoyuan City, Taoyuan County (TW)
(74) Representative: Emde, Eric

(57) **Abstract**

A method of handling an emergency bearer service for a mobile station in a wireless communication system is disclosed. The method comprises having a call; and not releasing the call when the call is ongoing and a change of a device configuration occurs.

## Description

### Background of the Invention

### 1. Field of the Invention

The application relates to a method used in a wireless communication system and related communication device, and more particularly, to a method of handling an emergency bearer service for a mobile station in a wireless communication system.

### 2. Description of the Prior Art

Machine-type communication (MTC) is one type of data communication including one or more entities not requiring human interactions. That is, the MTC refers to the concept of communication based on a network such as the existing GERAN, UMTS, long-term evolution (LTE), or the like used by a machine device instead of a mobile station (MS) used by a user. The machine device used in the MTC can be called an MTC device. There are various MTC devices such as a vending machine, a machine of measuring a water level at a dam, etc. That is, the MTC is widely applicable in various fields. The MTC device has features different from that of a typical MS. Therefore, a service optimized to the MTC may differ from a service optimized to human-to-human communication. In comparison with a current mobile network communication service, the MTC can be characterized as a different market scenario, data communication, less costs and efforts, a potentially great number of MSs for communication, wide service areas, low traffic per MS, etc.

Meanwhile, the number of MTC devices is expected to be much greater than the number of legacy devices, and a probability of performing operations of the plurality of MTC devices simultaneously is high due to a feature of a typical machine-to-machine (M2M) service. M2M communication (also referred to as "machine-type communications" or "MTC") may be used in a variety of areas. In the area of security, M2M communication may be used in surveillance systems, in backup of telephone landlines, in the control of physical accesses (e.g. to buildings), and in car/driver security. In the area of tracking and tracing, M2M communication may be used for fleet management, order management, Pay As You Drive (PAYD) applications, asset tracking, navigation, traffic information applications, road tolling, traffic optimization, and steering. In the area of payment systems, M2M communication may be used in point of sales, vending machines, customer loyalty applications, and gaming machines. In healthcare, M2M communication may be used for remotely monitoring vital signs, supporting the elderly or handicapped, in web access telemedicine points, and in remote diagnostics. In the area of remote maintenance/control, M2M communication may be used in programmable logic controllers (PLCs), sensors, lighting, pumps, valves, elevator control, vending machine control, and vehicle diagnostics. In the area of metering, M2M communication may be used in applications related to power, gas, water, heating, grid control, and industrial metering. Additionally, M2M communication based on machine type communication (MTC) technology may be used in areas such as customer service.

M2M communications may take advantage of deployed wireless networks based on Third Generation Partnership Project (3GPP) technologies such as Global System for Mobile Communications (GSM), Universal Mobile Telecommunications System (UMTS), Long Term Evolution (LTE), Long Term Evolution Advanced (LTE-Advanced), and/or other technologies such as WiMAX (Worldwide Interoperability for Microwave Access) or those developed by the Institute for Institute of Electrical and Electronics Engineers (IEEE) and 3GPP2. M2M communications may use networks based on these technologies to deliver business solutions in a cost-effective manner.

MTC functionality is provided by the visited and home networks when the networks are configured to support machine type communication. Some of the MTC functions are controlled by subscriber data. Other MTC functions are based on indicators sent by the UE to the network. MTC functionality is performed by UEs that are configured for MTC.

According to 5.3.13.3 section of 3GPP TS 23.060, a MS configured for the low priority device and/or MTC device will send MTC and/or low priority indicator to a network node (e.g. SGSN). The network will assign resources to the MS depending on the received low priority and/or MTC indicator. If there is a congestion in the network then the network may reject the attach procedure of the MTC and/or low priority device.

According to 5.10.3 section of 3GPP TS 23.060, the MS will initiate the normal attach procedure on a cell which provides normal service to the user when IMS emergency service is initiated by the user. Hence a MTC and/or low priority device sends MTC and/or low priority indicator with normal attach type to the SGSN. For the SGSN there is no way to recognize that this is emergency call and when there is congestion in the network, the network may reject the normal attach procedure for the low priority and/or MTC device treating the MS as low priority device although the attach procedure is to initiate the emergency call.

In addition, according to the agreement CT1-103879 of the prior art, It has been proposed that when the MTC device properties changes e.g low priority device is changed to normal device or MTC device changes to non-MTC device or vice versa then the device will either perform the RAU/TAU procedure to update the network with new device properties.

If there is ongoing CS call and the network changes the properties of the device from MTC and/or low priority device to non-MTC device or vice versa then the MS will initiate the detach and attach procedure again then the IMS ongoing call or/and any CS ongoing in NMO will be dropped.
Further attention is drawn to the document "3rd Generation Partnership Project; Technical Specification Group Services and System Aspects; General Packet Radio Service (GPRS); Service description; Stage 2 (Release 10)", 3GPP STANDARD; 3GPP TS 23.060, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, no. V1 0.1.0, 2010-09-29, pages 49-51,-68-72 which describes IMS emergency session support and emergency attach handling.
The document 3GPP: "3GPP TS 24.301 V1 0.0.0 3rd Generation Partnership Project; Technical Specification Group Core Network and Terminals; Non-AccessStratum (NAS) protocol for Evolved Packet System (EPS); Stage 3 (Release 10) ", 3GPP STANDARD; 3GPP TS 24.301, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, vol. V10.0.0, 2010-09-01, pages 72-79 describes EMM specific procedures such as e.g. attach procedures.

### Summary of the Invention

In accordance with the present invention, a method as set forth in claim 1, and a method as set forth in claim 6 are provided. Further embodiments of the invention are claimed in the dependent claims.

A method of handling an emergency bearer service for a mobile station in a wireless communication system is disclosed.

A method of handling an emergency bearer service for a mobile station in a wireless communication system is disclosed. The method comprises camping on a cell which provides a normal service or a limited service to the mobile station; and not sending an indicator to a network when the mobile station attaches to the network for the emergency bear service, wherein the indicator indicates the mobile station is a machine type communication (MTC) device or a low priority device.

A method of handling a emergency bear service for a mobile station in a wireless communication system is disclosed. The method comprises camping on a cell which provides a normal service or a limited service to the mobile station; and setting an indicator in a message to zero and sending the message to a network when the mobile station attaches to the network for the emergency bearer service, wherein the indicator indicates the mobile station is a machine type communication (MTC) device or a low priority device.

A method of handling a emergency bearer service for a mobile station in a wireless communication system is disclosed. The method comprises camping on a cell which provides a normal service or a limited service to the mobile station; and initiating an emergency attach procedure on the cell when the mobile station attaches to a network for the emergency bear service.

A method of handling an emergency bearer service for a mobile station in a wireless communication system is disclosed. The method comprises having a call; and not releasing the call when the call is ongoing and a change of a device configuration occurs.

A method of handling an emergency bearer service for a mobile station in a wireless communication system is disclosed. The method comprises having a call; and not changing a device configuration of the mobile station when the call is ongoing.

These and other objectives of the present invention will no doubt become obvious to those of ordinary skill in the art after reading the following detailed description of the preferred embodiment that is illustrated in the various figures and drawings.

### Brief Description of the Drawings

FIG.1 illustrates a schematic diagram of an exemplary wireless communication system.

FIG.2 is a schematic diagram of an exemplary communication device.

FIG.3 is a flow chart of an exemplary process.

FIG.4 is a flow chart of an exemplary process.

FIG.5 is a flow chart of an exemplary process.

FIG.6 is a flow chart of an exemplary process.

FIG.7 is a flow chart of an exemplary process.

### Detailed Description

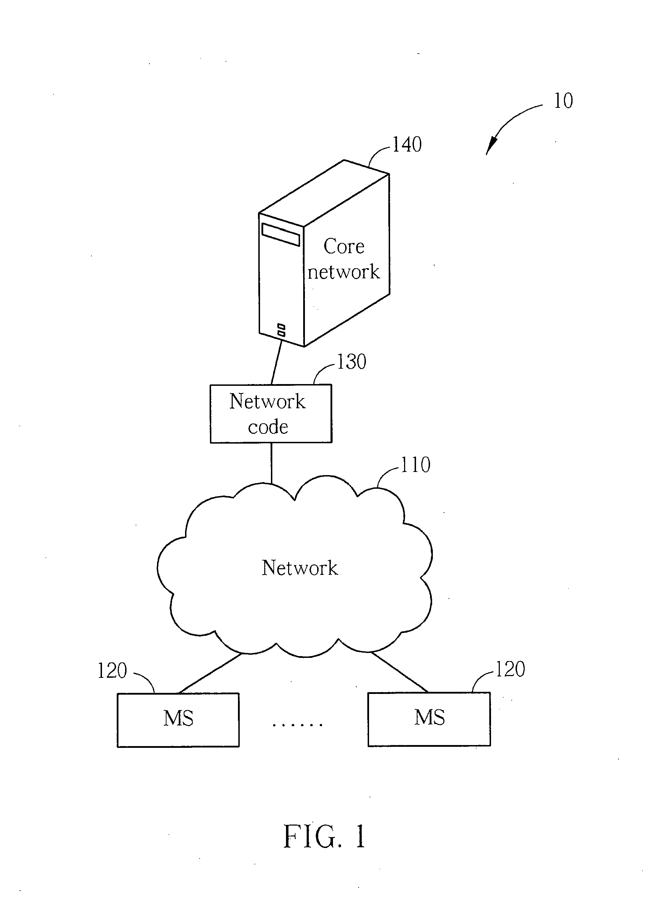

Please refer to FIG.1, which illustrates a schematic diagram of an exemplary wireless communication system 10. The wireless communication system 10 includes a network 110, and a plurality of mobile stations (MSs) 120. The MSs 120 are connected to the network 110. The MSs 120 can be configured by the network 110 as a Machine Type Communication (MTC) device, non-MTC device or a low priority device.

The network 110 may be referred as to Global System for Mobile Communications (GSM), Universal Mobile Telecommunications System (UMTS), GSM EDGE Radio Access Network (GERAN), Long Term Evolution (LTE), Long Term Evolution Advanced (LTE-Advanced), and/or other technologies such as WiMAX (Worldwide Interoperability for Microwave Access) or those developed by the Institute for Institute of Electrical and Electronics Engineers (IEEE). Please note that MTC devices 120 also can be referred as to user equipments (UEs) in a wireless communication system, which includes mobile phones, computer systems, etc. The network 110 is connected to a core network 140 via a network node 130. The core network 140 is responsible for the overall control of the MSs 120 and establishment of the bearers.

In LTE, the network node 130 can be a mobility management entity (MME). The MME is responsible for the delivery of data packets to the mobile stations back and forth within its geographical service area, including packet routing and transfer, mobility management (attach/detach and tracking area management), session management (PDN connection establishment/disconnect), logical link management, and authentication and charging functions. The MME can also serve as a local mobility anchor for inter-working with other RATs (e.g. GSM and UMTS). In UMTS, the network node 130 can be Serving GPRS Support Node (SGSN). The SGSN is responsible for the delivery of data packets to the mobile stations back and forth within its geographical service area, including packet routing and transfer, mobility management (attach/detach and tracking area management), session management (PDP Context establishment/disconnect), logical link management, and authentication and charging functions.

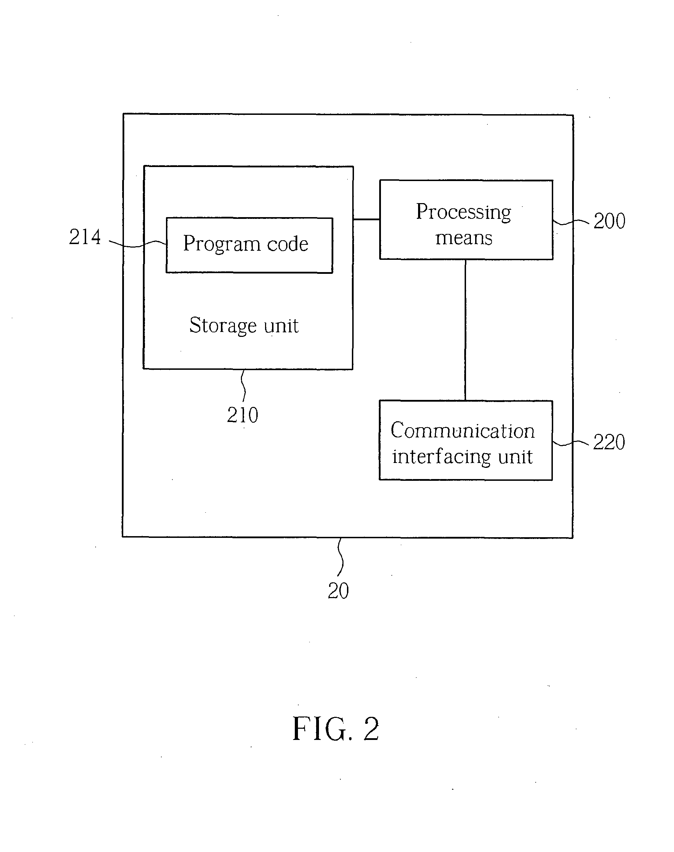

Please refer to FIG.2, which is a schematic diagram of an exemplary communication device 20. The communication device 20 can be the MTC devices, the network 110, the MSs 120 or the network node 130 and the core network 140 shown in FIG.1 and may include a processing means 200 such as a microprocessor or ASIC, a memory unit 210, and a communication interfacing unit 220. The memory unit 210 may be any data storage device that can store program code 214 for access by the processing means 200. Examples of the memory unit 210 include but are not limited to a subscriber identity module (SIM), read-only memory (ROM), random-access memory (RAM), CD-ROMs, magnetic tapes, floppy disks, and optical data storage devices. According to processing results of the processing means 200, the communication interfacing unit 220 can be a radio transceiver or a wire/logical link for communicating with the network 110.

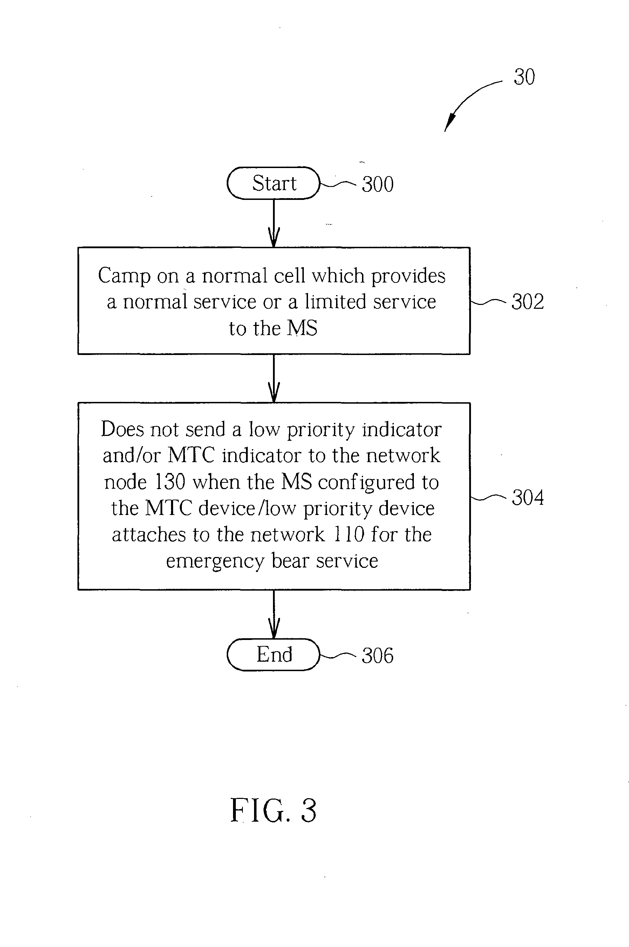

Please refer to FIG.3, which is a flow chart of an exemplary process 30. The process 30 is used for handling an emergency bearer service for a mobile station (MS) shown in FIG.1. The MS is configured as a MTC device/ a low priority device. The process 30 can be compiled into the program code 214 and includes the following steps:

Step 300: Start.

Step 302: Camp on a normal cell which provides a normal service or a limited service to the MS.

Step 304: Does not send a low priority indicator and/or MTC indicator to the network node 130 (e.g. SGSN) when the MS configured to the MTC device/low priority device attaches to the network 110 for the emergency bearer service.

Step 306: End.

According to the process 30, the MS configured as MTC device/low priority device camps on the normal cell providing the normal service or the limited service to the MS. The MS does not send the low priority indicator and/or MTC indicator to the network node 130 when the MS attaches to the network 110 for the emergency bearer service. The low priority indicator and/or MTC indicator is preferably sent in a attach request message and used for indicating that the MS is configured to the MTC device/low priority device. Therefore, when there is a congestion in the network 110, the network node 130 does not treat the MS as low priority since the network node 130 does not receive the low priority indicator and/or MTC indicator in the attach request message. Further, the network 110 accepts the attach request from the MS and performs an attach procedure for the emergency bearer service.

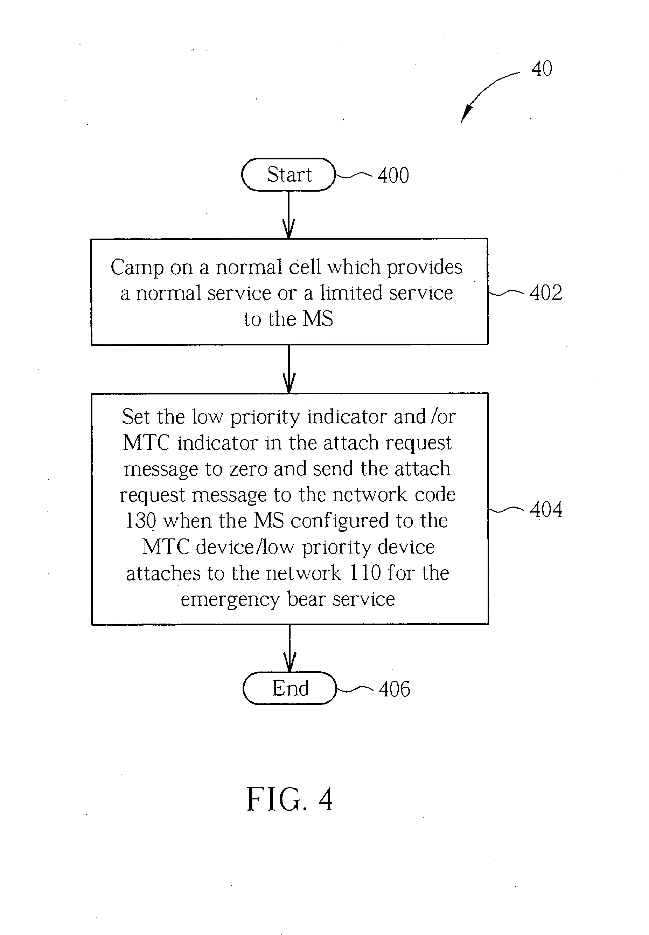

Please refer to FIG.4, which is a flow chart of an exemplary process 40. The process 40 is used for handling an emergency bearer service for a mobile station (MS) shown in FIG.1. The MS is configured to a MTC device/ a low priority device. The process 40 can be compiled into the program code 214 and includes the following steps:

Step 400: Start.

Step 402: Camp on a normal cell which provides a normal service or a limited service to the MS.,

Step 404: Set the low priority indicator and/or MTC indicator in the attach request message to zero and send the attach request message to the network node 130 (e.g. SGSN) when the MS configured to the MTC device/low priority device attaches to the network 110 for the emergency bearer service.

Step 406: End.

According to the process 40, the MS configured as MTC device/low priority device camps on the normal cell providing the normal service or the limited service to the MS. The MS sets the low priority indicator and/or MTC indicator in the attach request message to zero and sends the attach request message to the network code 130 when the MS attaches to the network 110 for the emergency bearer service. The low priority indicator and/or MTC indicator is used for indicating that the MS is configured to the MTC device/low priority device. Therefore, when there is a congestion in the network 110, the network node 130 receives the low priority indicator and/or MTC indicator in the attach request message and does not treat the MS as low priority since the low priority indicator and/or MTC indicator is set to zero in the attach request message. Further, the network 110 accepts the attach request from the MS and performs an attach procedure for the emergency bearer service.

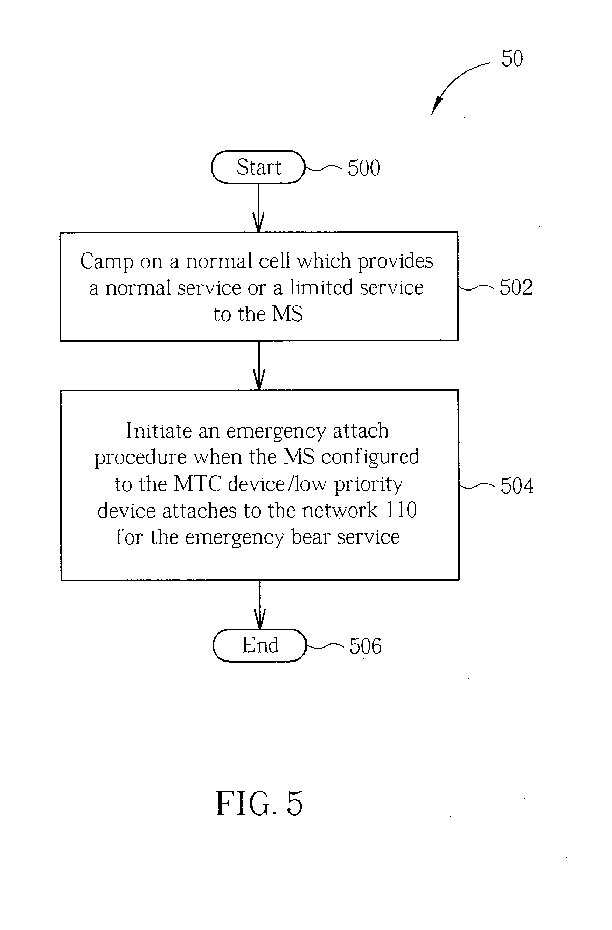

Please refer to FIG.5, which is a flow chart of an exemplary process 50. The process50 is used for handling an emergency bearer service for a mobile station (MS) shown in FIG.1. The MS is configured as a MTC device/ a low priority device. The process 50 can be compiled into the program code 214 and includes the following steps:

Step 500: Start.

Step 502: Camp on a normal cell which provides a normal service or a limited service to the MS.

Step 504: Initiate an emergency attach procedure when the MS configured to the MTC device/low priority device attaches to the network 110 for the emergency bear service.

Step 506: End.

According to the process 50, the MS configured as MTC device/low priority device camps on the normal cell providing the normal service or the limited service to the MS. The MS initiates an emergency attach procedure when the MS attaches to the network 110 for the emergency bearer service. The MS may initiate the emergency attach procedure by setting an attach type as Emergency Attach. Then, the MS sends the attach type in the attach request message. Therefore, when there is a congestion in the network 110, the network node 130 receives the attach type in the attach request message and knows the attach request is for the emergency bearer service. The network 110 accepts the attach request from the MS and performs the emergency attach.

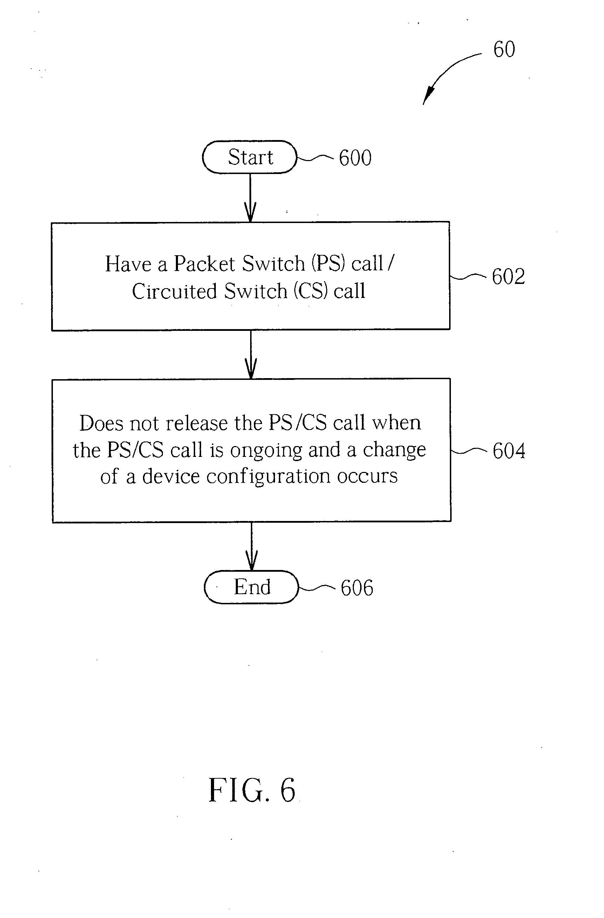

Please refer to FIG.6, which is a flow chart of an exemplary process 60. The process 60 is used for handling an emergency bearer service for a mobile station (MS) shown in FIG.1. The MS is configured to a MTC device/ a low priority device. The process 60 can be compiled into the program code 214 and includes the following steps:

Step 600: Start.

Step 602: Have a Packet Switch (PS) call/Circuited Switch (CS) call.

Step 604: Does not release the PS/CS call when the PS/CS call is ongoing and a change of a device configuration occurs.

Step 606: End.

According to the process 60, the MS configured as MTC device/low priority device has the PS/CS call. The PS call may be referred as to an IP Multimedia Subsystem (IMS) call. Meanwhile, the MS configured as the MTC device/low priority device has the change of the device configuration. Namely, the network 110 changes the property of the MS device from the MTC device to a non-MTC device or from the low priority device to a normal device. In this situation, the MS configured as a MTC device/ a low priority device does not release the PS/CS call. In other words, the MS will wait until the PS/CS call is finished. Therefore, the PS/CS call is not dropped.

The PS/CS call may be terminated by a user or a network 110. After the PS/CS call is finished, the MS initiates the detach procedure and the attach procedure again.

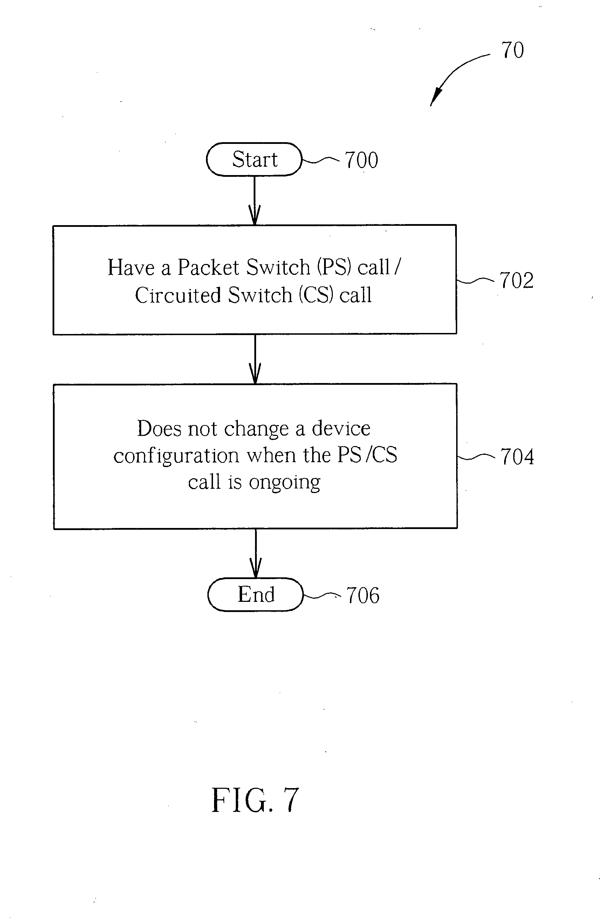

Please refer to FIG.7, which is a flow chart of an exemplary process 70. The process 70 is used for handling an emergency bearer service for a mobile station (MS) shown in FIG.1. The MS is configured to a MTC device/ a low priority device. The process 70 can be compiled into the program code 214 and includes the following steps:

Step 700: Start.

Step 702: Have a Packet Switch (PS) call/Circuited Switch (CS) call.

Step 704: Does not change a device configuration when the PS/CS call is ongoing.

Step 706: End.

According to the process 70, the MS configured as MTC device/low priority device has the PS/CS call. The PS call may be referred as to an IP Multimedia Subsystem (IMS) call. Meanwhile, the network 110 may attempt to change the property of the MS device from the MTC device to a non-MTC device or from the low priority device to a normal device. The MS does not change the device configuration when the PS/CS call is ongoing. In other words, the MS does not change from the MTC device to a non-MTC device or from the low priority device to the normal device.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processing means 200 processes the program code 214 related to the abovementioned processes and the processed results can handle handling an emergency bearer service for a MS configured to a MTC/low priority device in the wireless communication system 10.

To sum up, the MS configured to low priority device and/or MTC device is prohibited to send low priority indicator and/or MTC indicator or sets low priority indicator and/or MTC indicator to zero when attaching to the network for the emergency bearer services (e. g. in ATTACH REQUEST message). The MS is prohibited to send these indicators or sets these indicators to zero in ATTACH REQUEST message when camps on a cell which provide normal service or limited service to the MS. In some examples, the MS configured for the low priority indicator and/or MTC device will send attach type "Emergency attach" in the ATTACH REQUEST when initiates emergency bearer services on a cell which provides normal service to the MS.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method (60) of handling an emergency bearer service for a mobile station (120) in a wireless communication system (10), the method (60) comprising:
having (602) a call; and
not releasing (604) the call when the call is ongoing and a change of a device configuration occurs.

2. The method (60) of claim 1, wherein the change of the device configuration comprises the mobile station (120) changes from a low priority device to a normal device.

3. The method (60) of claim 1, wherein the change of the device configuration comprises the mobile station (120) changes from a machine type communication, MTC, device to a non-MTC device.

4. The method (60) of claim 1 further comprising performing a detach procedure and subsequently an attach procedure when the call is finished.

5. The method (60) of claim 1, wherein the call is a packet switch, PS, call or a circuited switch, CS, call.

6. A method (70) of handling an emergency bearer service for a mobile station (120) in a wireless communication system (10), the method comprising:
having (702) a call; and
not changing (704) a device configuration of the mobile station (120) when the call is ongoing.

7. The method (70) of claim 6, wherein not changing the device configuration comprises not changing a property of the mobile station (120) from a low priority device to a normal device.

8. The method (70) of claim 6, wherein not changing the device configuration comprises not changing a property of the mobile station (120) from a machine type communication, MTC, device to a non-MTC device.
